# EUROPEAN PATENT SPECIFICATION

(11) **EP 2 778 616 B1**
(45) Date of publication and mention of the grant of the patent: **26.12.2018**
(21) Application number: 14158482.1
(22) Date of filing: 10.03.2014
(51) Int. Cl.: G01C 21/36, G01C 21/34

(54) **Automated personal assistant system**
Automatisiertes persönliches Hilfssystem
Système d'assistant personnel automatisé

(30) Priority: 12.03.2013 US 201313796662
(43) Date of publication of application: 17.09.2014
(73) Proprietor: Harman International Industries, Incorporated, Stamford, CT 06901 (US)
(72) Inventor: Chatterjee, Dibyendu, 560095 Bangalore (IN)
(74) Representative: Bertsch, Florian Oliver

(56) References cited:
- WO-A2-01/79876
- US-A1- 2004 192 339
- US-A1- 2006 173 841

## Description

### BACKGROUND OF THE INVENTION

### 1. Technical Field.

The present disclosure relates to automated personal assistant systems.

### 2. Related Art.

Automated personal assistants have become popular with the evolution of mobile devices. For example, APPLE's SIRI has become a popular feature of APPLE's IPHONE and IPAD. Such assistants may have become popular because they can answer straightforward questions by providing data. Automated personal assistants operate by using user inputs and access to information from information networks, such as the Internet.

US 2004/0192339 A1 describes a method for providing location-based services in a wireless network. In this method, a user interface displays meet options for a user and a friend of the user, such as to meet near the user, to meet near the friend, or to meet between the user and the friend. The user can then select a region based on the selected meet option and a point of interest from a list of points of interests generated based on the user's selection. The prompts presented to the user for making the selection are similar for all users. US 2006/0173841 A1 describes a method of determining a route to a destination based on a partially completed route, in which a user is interrogated about the possible accuracy of a prediction of an event.

### SUMMARY

The invention provides a method according to claim 1 and a system according to claim 13. The dependent claims define further embodiments.

Described herein is an automated personal assistant system (APAS) that can provide automated personal assistance to a user of an electronic device, such as a smartphone or a vehicle head unit. In one example of the APAS, a user may receive a route to a requested destination that may include at least one point of interest (POI) along the route to the requested destination. An individual point of interest may be based on at least one user input that accompanies input of the requested destination. For example, after a user inputs a destination, the APAS may provide at least one question to the user that elicits an additional user input. The following are example questions the APAS may provide to a user. Do you want to stop for gas? Do you want to stop at John Smith's house? Do you want to buy a gift for your five-year-old niece? Do you want to meet John Smith at a café? Such questions can, for example, be dynamically generated by querying a user profile of the user, and comparing the user profile against the current date, time, and location of the user. A user profile can be generated manually via a questionnaire and/or automatically via feeds from other systems, such as social media networks, such as FACEBOOK, and/or personal information managers, such as, MICROSOFT OUTLOOK.

Additionally, in one example of the APAS, a user may receive a route to a requested destination that may include at least one joint point of interest along the route to the requested destination, or the joint point of interest may replace the requested destination. A joint point of interest may be a point of interest that may be shared by the user and at least one other individual. The joint point of interest may be based on at least one user input that accompanies input of the requested destination and at least one user input from the at least one other individual. For example, after a user inputs a destination, the APAS may provide at least one question to the user that elicits an additional user input. Such as, "Do you want to meet John Smith at a café?", for example. Because meeting John Smith at a café may include John Smith being at the café at the same time as the user, the APAS may provide a question or notice to an electronic device of John Smith, such as "Do you want to meet Jane Smith (the user) at the café?" or "Jane Smith is requesting to meet you at the café.", for example. Similar to the individual point of interest, questions for the joint point of interest can, for example, be dynamically generated by reviewing user profiles of the user and the at least one other individual, and comparing the user profiles against the current date, time, and location of the user and the at least one other person.

Additionally, in one example of the APAS, after an individual point of interest is chosen by the user, or a joint point of interest is agreed upon by at least two users, the APAS can perform one or more tasks with relation to the individual point of interest or joint point of interest, respectively. For example, the APAS can provide directions to the joint point of interest for the at least two individuals based at least on an individual's location and/or traveling conditions. Also, besides directions to the joint point of interest, a task can be made with relation to the joint point of interest. For example, the APAS can make reservations for the at least two individuals. Further, for example, the APAS can call the joint point of interest to inquire whether one of the at least two individuals has arrived. This may be especially useful in a business context, when it may be valuable to know whether another party has arrived on time.

### BRIEF DESCRIPTION OF THE DRAWINGS

The system, such as an automated personal assistant system (APAS), may be better understood with reference to the following drawings and description. The components in the figures are not necessarily to scale, emphasis instead being placed upon illustrating the principles of the invention. Moreover, in the figures, like referenced numerals designate corresponding parts throughout the different views.
Figure 1 illustrates a block diagram of an example network 100, which may include one or more aspects of an example APAS.
Figure 2 illustrates a block diagram of an example electronic device, which may include one or more aspects of an example APAS.
Figure 3 illustrates an operational flow diagram that can be performed by one or more aspects of an example APAS, such as the one or more aspects of the electronic device of Figure 2.
Figure 4 illustrates another operational flow diagram that can be performed by one or more aspects of an example APAS, such as the one or more aspects of the electronic device of Figure 2.

### DETAILED DESCRIPTION

It is to be understood that the following description of examples of implementations are given only for the purpose of illustration and are not to be taken in a limiting sense. The partitioning of examples in function blocks, modules or units illustrated in the drawings is not to be construed as indicating that these function blocks, modules or units are necessarily implemented as physically separate devices or a single physical device. Functional blocks, modules or units illustrated or described may be implemented as separate devices, circuits, chips, functions, modules, or circuit elements. One or more functional blocks, modules, or units may also be implemented in a common circuit, chip, circuit element or device.

Described herein is a system, such as an automated personal assistant system (APAS). The system may include an interface that may be configured to receive and transmit signals, containing information, to, from, and within the system. The information may be stored in memory that may be embedded in or communicatively coupled with a remote computer, such as, a server computer in a network cloud, or a client device, such as a smart phone or a vehicle head unit. For example, the interface may be configured to receive first navigation information from a local or a remote navigation system and/or a first electronic device of a first user, and the first navigation information may be stored in the memory of the system. Alternatively, the interface and the memory of the system may be part of the first electronic device, and the interface may be configured to receive the first navigation information from at least a user input device of the first electronic device and/or a navigation system of the first electronic device.

The system may also include a processor, such as a processor of a remote computer or a client device, communicatively coupled to the interface, which may be configured to receive and communicate information via the interface and/or a network device. For example, the processor may be configured to determine and communicate, via the interface and/or the network device, one or more first follow-up questions for communication to the first electronic device and/or presentation to the first user, based at least on the first navigation information and/or a first user profile. Alternatively, the processor of the system may be part of the first electronic device, and the processor may be configured to determine and communicate, via the interface and/or the network device, the one or more first follow-up questions for presentation to the first user by a display of the first electronic device.

The processor may also be configured to receive from the first electronic device, one or more first user responses to the one or more first follow-up questions. A user response to a follow-up question may be inputted via any user interface implementing one or more oral, retinal, or tactile user input technologies; and such a response may include various syntax that may include one or more words, sounds, retinal movements, and/or gestures, for example. The processor may also be configured to determine one or more points of interest based at least on the first navigation information, the first user profile, and/or the one or more first user responses to the one or more first follow-up questions. The one or more points of interest may include locations associated with a contact, locations associated with the first user, predetermined or predicted favored locations of the first user, and/or the like. A predetermined favored location of a user may be inputted by the user and associated with or included in a user profile, for example. A predicted favored location of a user may be automatically determined by a computer algorithm based on information included in the user profile of the user, for example.

In addition to the first user being associated with the first navigation information and the first user profile, for example, other users of the APAS, such as a second user, may be associated with at least respective other navigation information and another user profile, such as second navigation information and a second user profile.

Navigation information may include a present location of a user, one or more requested destinations of a user, a present date and/or time, one or more routes from a present location of a user to the one or more requested destinations, and/or one or more present route conditions for one or more routes. Route condition(s) may include weather conditions and/or traffic conditions, for example.

A user profile of a user of the APAS may be stored and communicated from a user profile source of the system. A user profile source may be a remote or local electronic device, such as a remote or local server or a client device, and may include a user profile database to store data associated with a user profile. For example, with respect to the system, the processor may be configured to receive the first user profile from storage of a user profile source. Also, for example, the processor may be configured to communicate to the user profile source, at least the first navigation information and/or the one or more first user responses to the one or more first follow-up questions to update the first user profile. For example, a user may input a predilection to a product or service in responding to a follow-up question, and the predilection may be communicated to a profile source and stored in memory of the profile source. Also, for example, a user's destination location (which may be an aspect of navigation information) may be repeatedly inputted over a certain period, which may be communicated to and stored in a database associated with a respective user profile as a favored destination.

A user profile, such as the first user profile, may include: a user identification (such as a user's name or a username), user contact information (such as a user's phone number, email address, and physical address), one or more contacts and contacts' contact information (such as a contact's phone number, email address, and/or physical address), user demographic information (such as age and sex), user preference information (such as a user's interests and attitudes), user scheduling information, user to-do list information, information regarding a point of interest (POI) (such as a POI's contact information and information that may be descriptive of the POI), and/or the like. A to-do list and user scheduling information may include event reminders such as reminders to perform a task such as a purchase for a birthday, anniversary, or another type of event. Also, such information may include regular tasks and appointments. For example, a regular task may include visiting a particular grocery store on particular nights after work; and a regular appointment may include a daily or weekly business meeting. Other information that may be included or incorporated with a user profile may include event broadcasts of one or more points of interest, such as promotional offers from businesses favored by the user. Other information that may be included or incorporated with a user profile may include sensed, predicted, or inputted physical status information associated with the user, one or more contacts of the user, or property of the user, such as a vehicle. For example, the condition of a user's heart or a size of a gas tank of a user's vehicle may be included.

The first follow-up questions include one or more initial questions and one or more supplemental questions that depend on the one or more initial questions. The initial question(s) and the supplemental question(s) may correspond to respective navigation information. For example, an initial question may include an inquiry into whether the user is interested in visiting a gift store because it is a week before a friend's birthday and the user happens to be near one or more gift
stores. The user's proximity to the gift store(s) can be derived from the respective navigation information. A supplemental question may be a follow-up question to an initial question, and in the preceding example may address what type of products the friend may enjoy. Also, in this example, another supplemental question may list one or more points of interest to choose based on previous questions.

Additionally or alternatively, the processor may also be configured to determine whether the one or more points of interest include one or more joint points of interest and/or individual points of interest. A joint point of interest may include a point of interest shared by the first user and a contact of the first user. An individual point of interest may include a point of interest of the first user. The processor may also be configured to communicate to the first electronic device, a request for the first electronic device to determine whether to include at least one of the one or more individual and/or joint points of interest in a route and which to include of the at least one of the one or more individual and/or joint points of interest in the route.

The processor may also be configured to receive from the first electronic device, a response signal that notifies the processor whether to include the at least one of the one or more individual and/or joint points of interest in a route and which to include of the at least one of the one or more individual and/or joint points of interest in the route. The processor may also be configured to determine a route with the at least one of the one and/or more individual or joint points of interest, according to at least the response signal. The processor may also be configured to communicate the route to the first electronic device, via the interface.

The processor may also be configured to communicate to one or more electronic devices of the at least one of the one or more individual and/or joint points of interest, the first navigation information, the first user profile, and/or the one or more first user responses to the one or more first follow-up questions. The processor may also be configured to receive from the one or more electronic devices of the at least one of the one or more individual and/or joint points of interest, point of interest information based at least on the communication of the first navigation information, the first user profile, and/or the one or more first user responses to the one or more first follow-up questions. The processor may also be configured to communicate to the first electronic device, one or more second follow-up questions according to at least the received point of interest information. The processor may also be configured to receive from the first electronic device, one or more second user responses to the one or more second follow-up questions. The processor may also be configured to communicate the one or more second user responses to the one or more electronic devices of the at least one of the one or more individual or joint points of interest.

The processor may also be configured to communicate to a second electronic device, a request for the second electronic device to instruct the contact to meet the first user at the at least one of the one or more joint points of interest. The contact of the first user may be a user of the second electronic device, for example. The processor may also be configured to receive from the second electronic device, a notification of whether the second user plans to meet the first user at the at least one of the one or more joint points of interest. The processor may also be configured to receive second navigation information from the remote or local navigation system and/or the second electronic device. The processor may also be configured to receive from a user profile source, a second user profile of the second user. The processor may also be configured to determine for presentation to the first user and the second user, respectively, one or more second follow-up questions based at least on the first navigation information, the second navigation information, the first user profile, the second user profile, and/or information associated with the at least one of the one or more joint points of interest. The processor may also be configured to communicate the one or more second follow-up questions to the first electronic device and the second electronic device for presentation to the first user and the second user, respectively.

The processor may also be configured to receive from the first electronic device and the second electronic device, one or more second user responses to the second follow-up questions. The processor may also be configured to determine a first route and a second route for the first user and the second user according to at least the one or more second user responses, respectively. The processor may also be configured to communicate the first and the second respective routes to the first electronic device and the second electronic device, respectively.

The processor may also be configured to communicate to one or more electronic devices of the at least one of the one or more joint points of interest, the first navigation information, the second navigation information, the first user profile, the second user profile, the one or more first user responses to the first follow-up questions, and/or one or more second user responses to the second follow-up questions. The processor may also be configured to receive from the one or more electronic devices of the at least one of the one or more joint points of interest, point of interest information based at least on the communication to the one or more electronic devices of the at least one of the one or more joint points of interest. The processor may also be configured to filter the point of interest information based at least on the first navigation information, the second navigation information, the first user profile, the second user profile, the one or more first user responses to the first follow-up questions, and/or one or more second user responses to the second follow-up questions.

The processor may also be configured to communicate one or more third follow-up questions to the first electronic device and the second electronic device, respectively, according to at least the received point of interest information. The processor may also be configured to receive from the first electronic device and/or the second electronic device, respectively, one or more third user responses to the one or more third follow-up questions. The processor may also be configured to communicate to the one or more electronic devices of the at least one of the one or more joint points of interest, the one or more third user responses.

As mentioned, the processor, the memory, and the interface of the system may be part of the first electronic device or may be part of another electronic device. For example, the system may be part of a computer such as a mobile device and/or a server. The computer via the system may be operable to receive navigation information from a user interface and/or a navigation system of the computer. The navigation information may also be received from a remote navigation system. The computer via the system may also be operable to determine one or more follow-up questions for presentation to the user, based at least on the navigation information and a user profile; and communicate to a display of the computer, the one or more follow-up questions. The computer may also be operable to receive from the user interface one or more user responses to the one or more follow-up questions; and determine one or more points of interest based at least on the one or more user responses to the one or more follow-up questions.

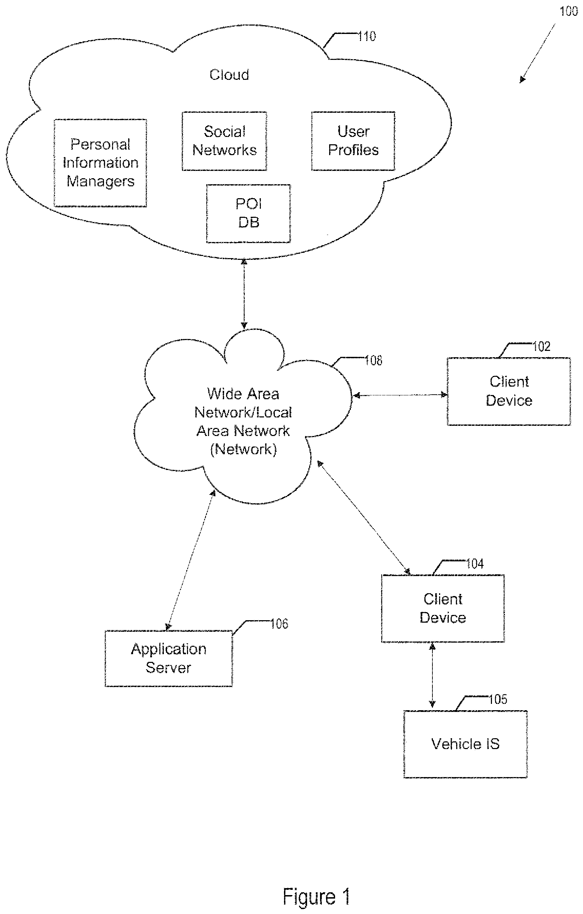

Figure 1 illustrates a block diagram of an example network 100, which may include one or more aspects of an example APAS. The example APAS may include one or more electronic devices, such as client devices 102 and 104. As illustrated, a client device may be communicatively coupled to external systems, such as client device 104 being coupled with vehicle information system 105. Further, the client devices may act as electronic devices of end users of the APAS. The APAS may also include one or more servers, such an application server 106, for example. Also depicted is network cloud 110, which may include remote online services such as personal information managers, social networks, user profile sources, and point of interest databases, for example. Such remote online services may provide information for the APAS to base its determination of one or more points of interest. The client devices, servers, and the cloud network may be communicatively coupled via a wide area network and/or a local area network, such as network 108.

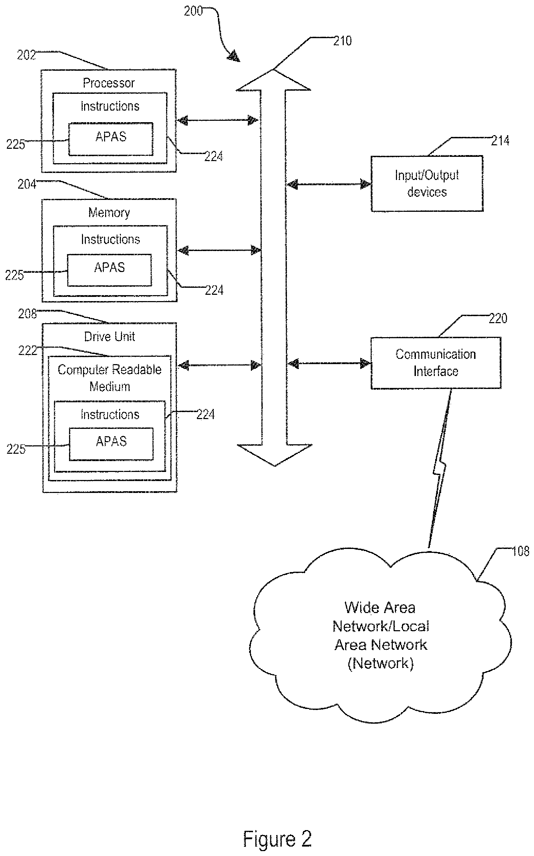

Figure 2 illustrates a block diagram of an example electronic device 200 included in an APAS. The electronic device 200 may be, include, and/or communicate with the client devices 102 or 104, the application server 106, and/or one or more aspects of the network cloud 110. Communications may occur via a network such as the network 108, for example.

The electronic device 200 may include a set of instructions that can be executed to cause the electronic device 200 to perform any of the methods and/or computer based functions disclosed herein.

The electronic device 200 may also include one or more processors or modules operable to perform any other of the methods and/or computer based functions disclosed herein. The electronic device 200 may operate as a standalone device, may be included as functionality within a device also performing other functionality, or may be connected, such as using a network, to other computer systems, devices, or peripheral devices.

With respect to the electronic device 200, in the example of a networked deployment, the electronic device may operate in the capacity of a server (such as the application server 106) and/or a client user computer (such as the client device 102 or 104) in a server-client user network environment, as a peer computer system in a peer-to-peer (or distributed) network environment, or in various other ways. The electronic device 200 can also be implemented as, or incorporated into, various electronic devices, such as hand-held devices such as smartphones and tablet computers, portable media devices such as recording, playing, and gaming devices, automotive electronics such as head units and navigation systems, or any machine capable of executing a set of instructions (sequential or otherwise) that result in actions to be taken by that machine. The electronic device 200 may be implemented using electronic devices that provide voice, audio, video and/or data communication. While a single device 200, such as an electronic device, is illustrated, the term "device" may include any collection of devices or sub-devices that individually or jointly execute a set, or multiple sets, of hardware and/or software instructions to perform one or more functions. The one or more functions may include: receiving at a processor, via an interface, from a navigation system and/or a first electronic device of first user, first navigation information; determining by the processor, one or more first follow-up questions for presentation to the first user, based at least on the first navigation information and/or a first user profile of the first user; communicating by the processor to the electronic device, the one or more first follow-up questions; receiving at the processor, via an interface, from the first electronic device, one or more first user responses to the one or more first follow-up questions; and determining by the processor, one or more points of interest based at least on the first navigation information, the first user profile, and/or the one or more first user responses to the one or more first follow-up questions.

The electronic device 200 may include a processor 202, such as a central processing unit (CPU), a graphics processing unit (GPU), or both. The processor 202 may be a component in a variety of systems. For example, the processor 202 may be part of a head unit in a vehicle. Also, the processor 202 may include one or more general processors, digital signal processors, application specific integrated circuits, field programmable gate arrays, servers, networks, digital circuits, analog circuits, combinations thereof, or other now known or later developed devices for analyzing and processing data. The processor 202 may implement a software program, such as code generated manually or programmed.

The electronic device 200 may include memory, such as a memory 204 that can communicate via a bus 210. The memory 204 may be or include a main memory, a static memory, or a dynamic memory. The memory 204 may include any non-transitory memory device. The memory 204 may also include computer readable storage media such as various types of volatile and non-volatile storage media including random access memory, read-only memory, programmable read-only memory, electrically programmable read-only memory, electrically erasable read-only memory, flash memory, a magnetic tape or disk, optical media and the like. Also, the memory may include a non-transitory tangible medium upon which software may be stored. The software may be electronically stored as an image or in another format (such as through an optical scan), then compiled, or interpreted or otherwise processed.

In one example, the memory 204 may include a cache or random access memory for the processor 202. In alternative examples, the memory 204 may be separate from the processor 202, such as a cache memory of a processor, the system memory, or other memory. The memory 204 may be or include an external storage device or database for storing data. Examples include a hard drive, compact disc (CD), digital video disc (DVD), memory card, memory stick, floppy disc, universal serial bus (USB) memory device, or any other device operative to store data. For example, the electronic device 200 may also include a disk or optical drive unit 208. The drive unit 208 may include a computer-readable medium 222 in which one or more sets of software or instructions, such as the instructions 224, can be embedded. The processor 202 and the memory 204 may also include a computer-readable storage medium with instructions or software.

The memory 204 may be operable to store instructions executable by the processor 202. The functions, acts or tasks illustrated in the figures or described may be performed by the programmed processor 202 executing the instructions stored in the memory 204. The functions, acts or tasks may be independent of the particular type of instructions set, storage media, processor or processing strategy and may be performed by software, hardware, integrated circuits, firmware, microcode and the like, operating alone or in combination. Likewise, processing strategies may include multiprocessing, multitasking, parallel processing and the like.

The instructions 224 may include the methods and/or logic described herein, including aspects or modules of the electronic device 200 and/or an example automated personal assistant system (such as APAS module 225). The instructions 224 may reside completely, or partially, in the memory 204 or in the processor 202 during execution by the electronic device 200. For example, software aspects or modules of the APAS (such as the APAS module 225) may include examples of various signal processors that may reside completely, or partially, in the memory 204 or in the processor 202 during execution by the electronic device 200.

With respect to various signal processors that may be used by the APAS, hardware or software implementations of such processors may include analog and/or digital signal processing modules (and analog-to-digital and/or digital-to-analog converters). The analog signal processing modules may include linear electronic circuits such as passive filters, active filters, additive mixers, integrators and delay lines. Analog processing modules may also include non-linear circuits such as compandors, multiplicators (frequency mixers and voltage-controlled amplifiers), voltage-controlled filters, voltage-controlled oscillators and phase-locked loops. The digital or discrete signal processing modules may include sample and hold circuits, analog time-division multiplexers, analog delay lines and analog feedback shift registers, for example. In other implementations, the digital signal processing modules may include ASICs, field-programmable gate arrays or specialized digital signal processors (DSP chips). Either way, such digital signal processing modules may enhance an image signal via arithmetical operations that include fixed-point and floating-point, real-valued and complex-valued, multiplication, and/or addition. Other operations may be supported by circular buffers and/or look-up tables. Such operations may include Fast Fourier transform (FFT), finite impulse response (FIR) filter, Infinite impulse response (IIR) filter, and/or adaptive filters such as the Wiener and Kalman filters.

The modules described herein may include software, hardware, firmware, or some combination thereof executable by a processor, such as processor 202. Software modules may include instructions stored in memory, such as memory 204, or another memory device, that may be executable by the processor 202 or other processor. Hardware modules may include various devices, components, circuits, gates, circuit boards, and the like that may be executable, directed, or controlled for performance by the processor 202. The term "module" may include a plurality of executable modules.

Further, the electronic device 200 may include a computer-readable medium that may include the instructions 224 or receives and executes the instructions 224 responsive to a propagated signal so that a device connected to the network 108, such as the electronic device 200, can communicate voice, video, audio, images or any other data over the network 108 to another electronic device. The instructions 224 may be transmitted or received over the network 108 via a communication port or interface 220, or using a bus 210. The communication port or interface 220 may be a part of the processor 202 or may be a separate component. The communication port or interface 220 may be created in software or may be a physical connection in hardware. The communication port or interface 220 may be configured to connect with the network 108, external media, one or more input/output devices 214, or any other components in the electronic device 200, or combinations thereof. The connection with the network 108 may be a physical connection, such as a wired Ethernet connection or may be established wirelessly. The additional connections with other components of the electronic device 200 may be physical connections or may be established wirelessly. The network 108 may alternatively be directly connected to the bus 210.

The network 108 may include wired networks, wireless networks, Ethernet AVB networks, a CAN bus, a MOST bus, or combinations thereof. The wireless network may be or include a cellular telephone network, an 802.11, 802.16, 802.20, 802.1Q or WiMax network. The wireless network may also include a wireless LAN, implemented via WI-FI or BLUETOOTH technologies. Further, the network 108 may be or include a public network, such as the Internet, a private network, such as an intranet, or combinations thereof, and may utilize a variety of networking protocols now available or later developed including TCP/IP based at least networking protocols. One or more components of the electronic device 200 may communicate with each other by or through the network 108.

The one or more input/output devices 214 may be configured to allow a user to interact with any of the components of the electronic device. The one or more input/output devices 214 may include a keypad, a keyboard, a cursor control device, such as a mouse, or a joystick. Also, the one or more input/output devices 214 may include a microphone, one or more visual displays, speakers, remote controls, touchscreen displays or any other devices operative to interact with the electronic device 200, such as any device operative to act as an interface between the electronic device and one or more users and/or other electronic devices.

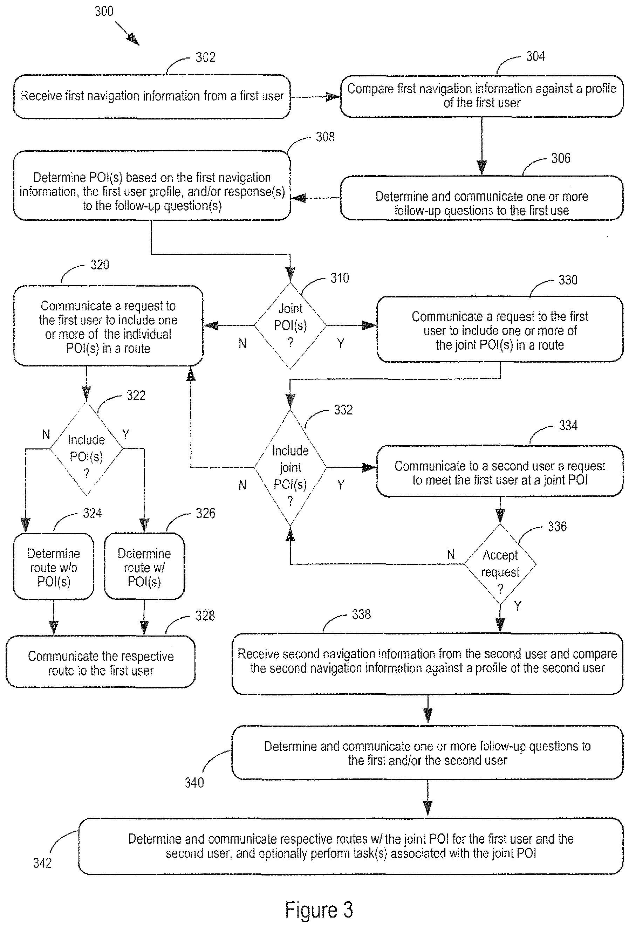

Figure 3 illustrates an example operational flow diagram that can be performed by one or more aspects of an example electronic device of an example APAS, such as the application server 106 and/or one of the client devices of Figure 1. The flow diagram 300 represents several sub-processes for providing automated personal assistance to one or more users of one or more electronic devices, such as smartphones or vehicle head units. In one example of the APAS, one or more users may receive from a navigation system (such as a global positioning system), one or more routes to a requested destination that may include one or more points of interest in the one or more routes. The one or more points of interest may include at least one individual point of interest and/or joint point of interest, for example.

In one example of the APAS, a processor (such as the processor 202) can execute processing device readable instructions encoded in memory (such as the memory 204). In such an example, the instructions encoded in memory may include a software aspect of the APAS, such as the APAS module 125. The example operation of the APAS may begin with a starting event, such as a first user inputting a request for a route between the user's inputted or current location and an inputted destination. User input may include voice, touch, retinal movement, gestures, buttons, sliders, and/or the like.

At 302, the example operation may continue with an electronic device such as the electronic device 200 receiving at a processing aspect (such as the processor 202), via an interface (such as the communication port or interface 220), first navigation information from a navigation system of a navigation service server and/or a first electronic device of the first user. The first navigation information may include the first user's present location, the first user's requested destination, the present date and time, one or more routes between the first user's present location and the first user's requested destination, and present route conditions for the one or more routes, such as traffic and weather conditions, for example.

At 304, the example operation may continue with the processing aspect comparing the first navigation information against a first user profile of the first user. The first user profile may be stored on a remote server, for example. The remote server, for example, may be part of the cloud 110 depicted in Figure 1.

Also, the processing aspect may receive the first profile prior to the comparison of the first navigation information and the first user profile. The first user profile may include user contact information, one or more contacts and respective contact(s) information, user demographic information, user preference information, user scheduling information, user to-do list information, and/or the like.

At 306, the example operation may continue with the processing aspect determining and communicating one or more first follow-up questions to the first electronic device for presentation to the first user, based at least on the first navigation information and/or first user profile. The one or more first follow-up questions may include one or more initial questions and supplemental questions that depend on the one or more initial questions, respectively. The presentation of the first follow-up questions to the user may be tactile, graphical, and/or audio.

At 308, the example operation may continue with the processing aspect determining one or more points of interest based at least on the first navigation information, the first user profile, and/or one or more first user responses to the one or more first follow-up questions. The one or more points of interest may include: a location related to a contact, such as a present location, residence, workplace, or meet-up location of a contact; a location related to the first user, such as a residence, workplace, or any other type of common location of the first user; and/or a predetermined or predicted favored location for the first, such as a predetermined or predicted favored place of business, landmark, or the like.

At 310, the example operation may continue with the processing aspect determining whether the one or more points of interest include one or more joint points of interest or individual points of interest. A joint point of interest may be a point of interest shared by the first user and a contact of the user (also referred to below as the second user). An individual point of interest may not be shared by the first user, for example. Where there are no joint points of interest, the example operation may continue with the processing aspect communicating a request to the first electronic device, to determine whether to include at least one of the one or more individual points of interest in a route (at 320). Also, it may be determined which of the at least one of the one or more individual points of interest to include in the route. Where there are one or more joint points of interest, the example operation may continue with the processing aspect communicating a request to the first electronic device, to determine whether to include at least one of the one or more joint points of interest in a route (at 330). Also, it may be determined which of the at least one of the one or more joint points of interest to include in the route.

At 322, the example operation may continue with the processing aspect receiving a response from the first electronic device and determining whether to include at least one of the one or more individual points of interest in the route. Also, a response may be received with respect to which of the at least one of the one or more individual points of interest to include in the route. At 324 and 326, respectively, the example operation may continue with the processing aspect determining a route without or with the one or more individual points of interest, according to at least the response. At 328, the example operation may continue with the processing aspect communicating the route to the first electronic device of the first user.

At 332, the example operation may continue with the processing aspect receiving a response from the first electronic device and determining whether to include at least one of the one or more joint points of interest in the route. Also, a response may be received with respect to which of the at least one of the one or more joint points of interest to include in the route. Not explicitly depicted in Figure 3, the example operation may continue with the processing aspect determining a route with or without the one or more joint points of interest, according to at least the response. Also, the example operation may continue with the processing aspect communicating the route to the first electronic device of the first user with or without the one or more joint points of interest. The example operation may also continue with the processing aspect communicating a corresponding route to a second electronic device of the second user, who may be a contact of the first user.

At 334, where the at least one of the one or more joint points of interest is to be included in the route, the example operation may continue with the processing aspect communicating a request to a second electronic device, such as an electronic device of a contact of the user, for example. The request may be for the second user to meet the first user at the at least one of the one or more joint points of interest. Where the at least one of the one or more joint points of interest is not to be included in the route, the example operation may continue with the processing aspect communicating a request to the first electronic device of the first user (at 320), to determine whether to include at least one of the individual one or more points of interest in a route and which of the at least one of the one or more individual points of interest to include in the route (at 322).

At 336, the example operation may continue with the processing aspect receiving a response from the second electronic device of the second user and determining whether the response includes to accept the request at 334, such as accepting a request to meet the first user at the at least one of the one or more joint points of interest. At 338, where, for example, the first user and the second user are to meet at the at least one of the one or more joint points of interest, the example operation may continue with the processing aspect receiving second navigation information from a remote navigation system and/or the second electronic device of the second user, and comparing the second navigation information against a second profile of the second user.

Where, for example, the first user and the second user are not to meet at the at the at least one of the one or more joint points of interest and where there are no other joint points of interest, the example operation may continue with the processing aspect communicating a request to the first electronic device to determine whether to include at least one of the one or more individual points of interest in a route (at 320). Also, it may also be determined as to which of the at least one of the one or more individual points of interest to include in the route.

Where, for example, the first user and the second user are not to meet at the at least one of the one or more joint points of interest and where there is at least one other joint point of interest of the one or more joint points of interest, the example operation may continue with the processing aspect communicating a request to the first electronic device to determine whether to include the at least one other of the one or more joint points of interest in a route (at 330). Also, it may also be determined as to which of the at least one other of the one or more joint points of interest to include in the route.

At 340, the example operation may continue with the processing aspect determining and communicating one or more second follow-up questions to the first electronic and the second electronic device for presentation to the first user and the second user, respectively. The second follow-up questions may be based at least on the first navigation information, the second navigation information, the first user profile, and the second user profile, respectively, and/or information associated with the at least one of the one or more joint points of interest, for example. The presentation of the second follow-up questions may be tactile, graphical, and/or audio. The one or more second follow-up questions may include one or more initial questions and supplemental questions that depend on the one or more initial questions, respectively.

At 342, the example operation may continue with the processing aspect receiving one or more responses from the first electronic device and the second electronic device including information associated with the one or more second follow-up questions. The example operation may also continue with the processing aspect determining and communicating respective routes with the at least one of the one or more joint points of interest for the first user and the second user, according to at least the one or more responses. Additionally, the example operation may continue with the processing aspect performing one or more tasks associated with the at least one of the one or more joint points of interest, according to at least the one or more responses.

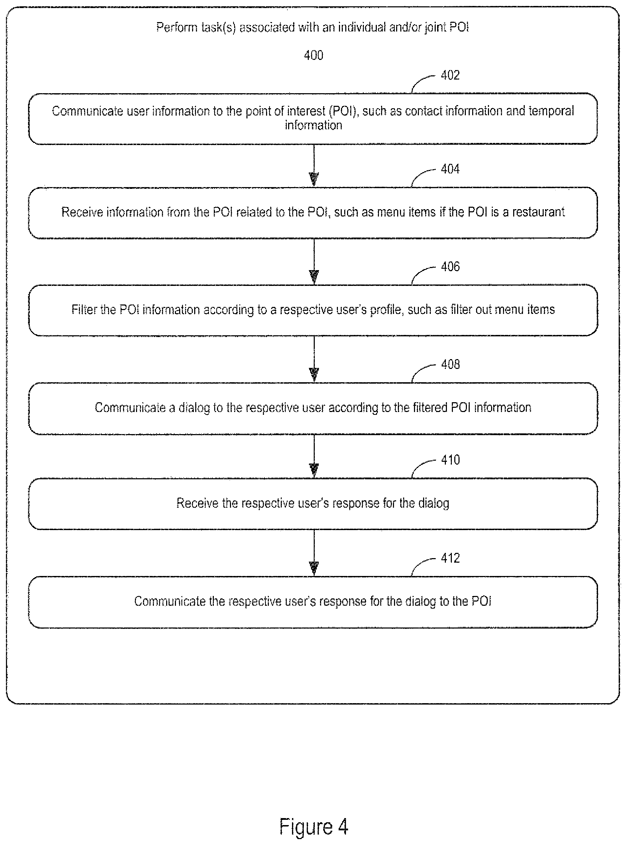

Figure 4 illustrates an operational flow diagram that can be performed by one or more aspects of an example electronic device of an example APAS, such as the application server 106. The flow diagram 400 represents several sub-processes for providing automated personal assistance to one or more users of one or more electronic devices, such as smartphones or vehicle head units. In one example of the APAS, one or more users may receive one or more routes to a requested destination that may include one or more points of interest in the one or more routes. Further, as illustrated in Figure 4, one or more tasks associated with the one or more points of interest may be performed by a processing aspect of the APAS.

In one example of the APAS, a processing aspect (such as the processor 202) can execute processing device readable instructions encoded in memory (such as the memory 204). In such an example, the instructions encoded in memory may include a software aspect of the APAS, such as the APAS module 125. The example operation of the APAS may begin with a starting event, such as the processing aspect determining and communicating respective routes with the at least one of the one or more points of interest for one or more users, according to at least one or more messages sent from the one or more users, for example.

At 402, the example operation may continue with an electronic device such as the electronic device 200 communicating by the processing aspect, user information from one or more users to one or more points of interest. The user information may include information associated with a user profile and temporal information, such as arrival information.

At 404, the example operation may continue with the processing aspect receiving information from the one or more points of interest, which may include at least information associated with the one or more points of interests, respectively. For example, if one of the points of interest is a café, menu items may be included in the information associated with the point of interest.

At 406, the example operation may continue with the processing aspect filtering the information associated with the one or more points of interest. The filtering may occur according to one or more user profiles or responses to follow-up questions. For example, the processing aspect may filter out menu items according to food predilections or allergies noted in a user profile or in follow-up questions.

At 408, the example operation may continue with the processing aspect communicating a dialog to the respective user according to the filtered point of interest information. For example, one or more users may receive through their electronic devices an initial question asking what menu items they would like to purchase when they arrive at the café. Further, for example, there may be supplemental questions presented to the one or more users that depend on the initial question. For example, if a user orders fish, a follow-up question may include how to cook the fish, such as whether to cook the fish mild, medium, or very spicy.

At 410, the example operation may continue with the processing aspect receiving responses to the dialog from the one or more users. For example, the user may input into a respective electronic device that he or she wishes to purchase a milk, fries, and fish; and that he or she wishes the fish to be cooked very spicy. This information can be communicated from the electronic device of the user to the processing aspect, via, for example, one or more communications interfaces and networks.

At 412, the example operation may continue with the processing aspect communicating the one or more users' inputs for the dialog to one or more electronic devices of the point(s) of interest. In such example scenarios, at least two users can agree to meet at a café, receive route information to the café, make reservations, and order their food items from the café from their electronic device, such as their smartphones and/or vehicle head units.

The system and example operations described herein may facilitate several services. For example, the system can facilitate making restaurant reservations, parking reservations, service appointments, and/or entertainment reservations, such as making a doctor's appointment or purchasing tickets to an event. Also, the system may facilitate purchasing of one or more products at a store, for example.

Also, in returning home from work, one or more presented points of interest may include a favored store, for example. Also, a shopping items list associated with the user may be communicated to the store before the user arrives at the store, so that employees of the store can prepare the shopping items for purchase before the user arrives. Further, a credit card of the user may be charged for the items prior to arrival at the store.

In the above example and other example scenarios, the presented points of interest may have been selected from a to-do list or scheduling information found in a respective user profile of the user. The user profile information or any information regarding the user may be stored at any node of the APAS. For example, such information may be retrieved from various sources, such as various networks and accounts, such as social networks and accounts. This information may be retrieved from data storage in a cloud or known remote server, or may be pushed to the electronic device of the user periodically or at scheduled times set by the user, for example. Also, user information may be pushed to the electronic device of the user as a result of a trigger. For example, a low fuel tank may be sensed by a vehicle information system, and this event may trigger a push of user information to the electronic device. This trigger may also result in the one or more points of interest including a gas station along a route.

For example, a gas station may occur as a point of interest due to a respective vehicle information system communicatively coupled with the user's electronic device alerting an aspect of the APAS that the respective vehicle's gas tank is nearly empty. For example, the gas tank being reduced below a threshold may trigger such an event. Also, if permitted by the user for example, a credit card may be charged for a predetermined amount of gas, so the user does not need to bother swiping a credit card at the gas station. This is one of many example implementations of the system.

In one example, the system can receive route, traffic, and weather information from navigation, traffic, and weather services, and can also receive social or personal information, such as user profile information and business contacts', friends', and family members' information from various sources such as social networks and/or personal information managers. Such social or personal information may include events, such as birthdays, anniversaries, and appointments. Such information may also include to-do lists and predilections of the user and the user's contacts.

Also, information related to a physical state of the user, one or more contacts, or a user's vehicle or other property may be retrieved by the system via respective sensors communicatively coupled to the system. This information retrieved by the system, which may be retrieved periodically or due to a trigger, can be used to determine one or more points of interest, and routes including at least one of the one or more points of interest. In one example, the information can be retrieved from a cloud service that hosts such information and/or one or more aspects of the APAS. Besides generating routes, the system may also determine and provide information related to the routes such as temporal information and/or point of interest information.

Another benefit of the system may include a notification of a party arriving at a joint point of interest or later declining a meeting at an agreed upon joint point of interest. Such notifications may be communicated to the electronic device of the first user by a device of the contact and/or a device of the point of interest. Such a notification may be presented to a user in various ways, and such a notification may trigger a routing event. For example, a user may be rerouted via another point of interest or rerouted for a direct trip to a final destination in response to a contact canceling a meeting.

While various embodiments of the invention have been described, it will be apparent to those of ordinary skill in the art that many more embodiments and implementations are possible within the scope of the invention. Accordingly, the invention is not to be restricted except in light of the attached claims.

## Claims

1. A method, comprising:
receiving, at a processor, navigation information and a user profile associated with a user,
determining, by the processor (202), first follow-up questions for presentation to a user, based at least on navigation information and the user profile of the user, the first follow-up questions comprising one or more initial questions and one or more supplemental questions that depend on the one or more initial questions and being generated dynamically by querying the user profile of the user and comparing the user profile against at least the navigation information;
communicating, by the processor (202), the first follow-up questions to the user;
receiving, at the processor (202), one or more user responses to the first follow-up questions; and
determining, by the processor (202), a point of interest based at least on the one or more user responses to the first follow-up questions.

2. The method of claim 1, where the point of interest is a joint point of interest, where the joint point of interest is a point of interest shared by the user and a contact of the user, and where the method further comprises communicating, by the processor, instructions for presentation to the contact of the user to meet the user at the joint point of interest.

3. The method of claim 1 or 2, where the point of interest is a joint point of interest, where the joint point of interest is a point of interest shared by the user and a contact of the user, where the navigation information is first navigation information, and where the method further comprises receiving, at the processor (202), second navigation information based on the joint point of interest.

4. The method of any of claims 1 to 3, where the point of interest is a joint point of interest, where the joint point of interest is a point of interest shared by the user and a contact of the user, where the method further comprises determining, by the processor (202), one or more second follow-up questions for presentation to the user, based at least on the joint point of interest.

5. The method of claim 4, where the one or more user responses are one or more first user responses, and where the method further comprises:
receiving, at the processor (202), one or more second user responses to the one or more second follow-up questions; and
calculating, by the processor (202), a route according to at least the one or more second user responses.

6. The method of claim 5, further comprising communicating, by the processor, the route to the user.

7. The method of any of claims 1 to 6, where the point of interest is a joint point of interest, where the joint point of interest is a point of interest shared by the user and a contact of the user, where the method further comprises determining, by the processor, one or more second follow-up questions for presentation to the contact, based at least on the joint point of interest.

8. The method of any of claims 1 to 7, further comprising communicating, by the processor, the user profile of the user to the point of interest.

9. The method of claim 8, further comprising receiving from the point of interest, at the processor (202), one or more responses to the communication of the user profile.

10. The method of any of claims 1 to 9, where the navigation information includes at least one of a present date and time, one or more routes from a present location of the user to a requested destination, present route conditions for the one or more routes.

11. The method of claim 10, where the route conditions include one or more traffic conditions.

12. The method of any of claims 1 to 11, where the user profile includes at least one of user scheduling information, user to-do list information.

13. A system, comprising:
an interface (220) configured to receive navigation information and a user profile associated with a user; and
a processor (202), communicatively coupled to the interface, configured to:
determine first follow-up questions for presentation to the user, based at least on the navigation information and the user profile, the first follow-up questions comprising one or more initial questions and one or more supplemental questions that depend on the one or more initial questions and being generated dynamically by querying the user profile of the user and comparing the user profile against at least the navigation information,
communicate, by the processor (202) and via the interface (220), the first follow-up questions to the user;
receive, at the processor (202) and via the interface (220), one or more user responses to the first follow-up questions; and
determine, by the processor (202), a point of interest based at least on the one or more user responses to the first follow-up questions.

14. The system of claim 13, where the processor is further configured to:
determine multiple points of interest based at least on the one or more user responses to the one or more follow-up questions.

## Patentansprüche

1. Verfahren, das Folgendes umfasst:
Empfangen von Navigationsinformationen und einem Benutzerprofil, das mit einem Benutzer assoziiert ist, an einem Prozessor,
Bestimmen durch den Prozessor (202) von ersten Folgefragen zur Vorlage an einen Benutzer mindestens basierend auf Navigationsinformationen und dem Benutzerprofil des Benutzers, wobei die ersten Folgefragen eine oder mehrere initiale Fragen und eine oder mehrere ergänzende Fragen umfassen, die von der einen oder den mehreren initialen Fragen abhängen und dynamisch durch ein Abfragen des Benutzerprofils und ein Vergleichen des Benutzerprofils mit mindestens den Navigationsinformationen erzeugt werden;
Kommunizieren durch den Prozessor (202) der ersten Folgefragen an den Benutzer;
Empfangen von einer oder mehreren Benutzerantworten auf die ersten Folgefragen an dem Prozessor (202); und
Bestimmen eines Interessenspunkts durch den Prozessor (202) basierend mindestens auf der einen oder den mehreren Benutzerantworten auf die ersten Folgefragen.

2. Verfahren nach Anspruch 1, wobei der Interessenspunk ein gemeinsamer Interessenspunkt ist, wobei der gemeinsame Interessenspunkt ein Interessenspunkt ist, der von dem Benutzer und einem Kontakt des Benutzers geteilt wird, und wobei das Verfahren ferner ein Kommunizieren durch den Prozessor von Anweisungen für eine Vorlage an einen Kontakt des Benutzers umfasst, um den Benutzer an dem gemeinsamen Interessenspunkt zu treffen.

3. Verfahren nach Anspruch 1 oder 2, wobei der Interessenspunkt ein gemeinsamer Interessenspunkt ist, wobei der gemeinsame Interessenspunkt ein Interessenspunkt ist, der von dem Benutzer und einem Kontakt des Benutzers geteilt wird, wobei die Navigationsinformationen erste Navigationsinformationen sind, und wobei das Verfahren ferner ein Empfangen von zweiten Navigationsinformationen an dem Prozessor (202) basierend auf dem gemeinsamen Interessenspunkt umfasst.

4. Verfahren nach einem der Ansprüche 1 bis 3, wobei der Interessenspunkt ein gemeinsamer Interessenspunkt ist, wobei der gemeinsame Interessenspunkt von dem Benutzer und einem Kontakt des Benutzers geteilt wird, wobei das Verfahren ferner ein Bestimmen von einer oder mehreren zweiten Folgefragen durch den Prozessor (202) zur Vorlage an den Benutzer umfasst, mindestens auf dem gemeinsamen Interessenspunkt basierend.

5. Verfahren nach Anspruch 4, wobei die eine oder mehreren Antworten eine oder mehrere erste Antworten sind, und wobei das Verfahren ferner Folgendes umfasst:
Empfangen von einer oder mehreren zweiten Benutzerantworten auf die eine oder mehreren zweiten Folgefragen an dem Prozessor (202); und
Berechnen einer Strecke gemäß mindestens der einen oder den mehreren zweiten Benutzerantworten durch den Prozessor (202) .

6. Verfahren nach Anspruch 5, ferner umfassend ein Kommunizieren der Strecke an den Benutzer durch den Prozessor.

7. Verfahren nach einem der Ansprüche 1 bis 6, wobei der Interessenspunkt ein gemeinsamer Interessenspunkt ist, wobei der gemeinsame Interessenspunkt ein Interessenspunkt ist, der von dem Benutzer und einem Kontakt des Benutzers geteilt wird, wobei das Verfahren ferner ein Bestimmen von einer oder mehreren zweiten Folgefragen durch den Prozessor zur Vorlage an den Kontakt umfasst, mindestens auf dem gemeinsamen Interessenspunkt basierend.

8. Verfahren nach einem der Ansprüche 1 bis 7, ferner umfassend ein Kommunizieren des Benutzerprofils des Benutzers an den Interessenspunkt durch den Prozessor.

9. Verfahren nach Anspruch 8, ferner umfassend ein Empfangen von einer oder mehreren Antworten auf das Kommunizieren des Benutzerprofils von dem Interessenspunkt an dem Prozessor (202) .

10. Verfahren nach einem der Ansprüche 1 bis 9, wobei die Navigationsinformationen mindestens eines von einem aktuellen Datum und Zeitpunkt, eine oder mehrere Strecken von dem aktuellen Standort des Benutzer zu einem angefragten Ziel und aktuelle Streckenbedingungen für die eine oder mehreren Strecken einschließen.

11. Verfahren nach Anspruch 10, wobei die Streckenbedingungen eine oder mehrere Verkehrsbedingungen einschließen.

12. Verfahren nach einem der Ansprüche 1 bis 11, wobei das Benutzerprofil mindestens eines von Benutzerzeitplaninformationen und Benutzer-Aufgabenlisten-Informationen einschließt.

13. System, das Folgendes umfasst:
eine Schnittstelle (220), die dazu konfigurier ist, Navigationsinformationen und ein Benutzerprofil, das mit einem Benutzer assoziiert ist, zu empfangen; und
einen Prozessor (202), der kommunizierend an die Schnittstelle gekoppelt und dazu konfiguriert ist:
erste Folgefragen zur Vorlage an einen Benutzer basierend mindestens auf den Navigationsinformationen und dem Benutzerprofil zu bestimmen, wobei die ersten Folgefragen eine oder mehrere initiale Fragen und eine oder mehrere ergänzende Fragen umfassen, die von der einen oder den mehreren initialen Fragen abhängig sind und dynamisch durch ein Abfragen des Benutzerprofils des Benutzers und ein Vergleichen des Benutzerprofils mit mindestens den Navigationsdaten erzeugt werden,
die ersten Folgefragen durch den Prozessor (202) und über die Schnittstelle (220) an den Benutzer zu kommunizieren;
eine oder mehrere Benutzerantworten auf die ersten Folgefragen an dem Prozessor (202) und über die Schnittstelle (220) zu empfangen; und
einen Interessenspunkt durch den Prozessor (202) basierend mindestens auf der einen oder den mehreren Antworten auf die ersten Folgefragen zu bestimmen.

14. System nach Anspruch 13, wobei der Prozessor ferner dazu konfiguriert ist:
mehrere Interessenspunkte basierend mindestens auf der einen oder den mehreren Benutzerantworten auf die eine oder mehreren Folgefragen zu bestimmen.

## Revendications

1. Procédé, comprenant :
la réception, au niveau d'un processeur, d'informations de navigation et d'un profil d'utilisateur associé à un utilisateur,
la détermination, par le processeur (202), de premières questions de suivi à présenter à un utilisateur, sur la base au moins des informations de navigation et du profil d'utilisateur de l'utilisateur, les premières questions de suivi comprenant une ou plusieurs questions initiales et une ou plusieurs questions supplémentaires qui dépendent des une ou plusieurs questions initiales et étant générées dynamiquement par l'interrogation du profil d'utilisateur de l'utilisateur et la comparaison du profil d'utilisateur avec au moins les informations de navigation ;
la communication, par le processeur (202), des premières questions de suivi à l'utilisateur ;
la réception, au niveau du processeur (202), d'une ou de plusieurs réponses d'utilisateur aux premières questions de suivi ; et
la détermination, par le processeur (202), d'un point d'intérêt sur la base au moins des une ou plusieurs réponses d'utilisateur aux premières questions de suivi.

2. Procédé selon la revendication 1, dans lequel le point d'intérêt est un point d'intérêt commun, dans lequel le point d'intérêt commun est un point d'intérêt partagé par l'utilisateur et un contact de l'utilisateur, et le procédé comprenant en outre la communication, par le processeur, d'instructions de présentation au contact de l'utilisateur pour rencontrer l'utilisateur au niveau du point d'intérêt commun.

3. Procédé selon la revendication 1 ou 2, dans lequel le point d'intérêt est un point d'intérêt commun, dans lequel le point d'intérêt commun est un point d'intérêt partagé par l'utilisateur et un contact de l'utilisateur, dans lequel les information de navigation sont des premières informations de navigation, et le procédé comprenant en outre la réception, au niveau du processeur (202), de secondes informations de navigation sur la base du point d'intérêt commun.

4. Procédé selon l'une quelconque des revendications 1 à 3, dans lequel le point d'intérêt est un point d'intérêt commun, dans lequel le point d'intérêt commun est un point d'intérêt partagé par l'utilisateur et un contact de l'utilisateur, le procédé comprenant en outre la détermination, par le processeur (202), d'une ou de plusieurs secondes questions de suivi à présenter à l'utilisateur, sur la base au moins du point d'intérêt commun.

5. Procédé selon la revendication 4, dans lequel les une ou plusieurs réponses d'utilisateur sont une ou plusieurs premières réponses d'utilisateur, et le procédé comprenant en outre :
la réception, au niveau du processeur (202), d'une ou de plusieurs secondes réponses d'utilisateur aux une ou plusieurs secondes questions de suivi ; et
le calcul, par le processeur (202), d'un itinéraire en fonction d'au moins les une ou plusieurs secondes réponses d'utilisateur.

6. Procédé selon la revendication 5, comprenant en outre la communication, par le processeur, de l'itinéraire à l'utilisateur.

7. Procédé selon l'une quelconque des revendications 1 à 6, dans lequel le point d'intérêt est un point d'intérêt commun, dans lequel le point d'intérêt commun est un point d'intérêt partagé par l'utilisateur et un contact de l'utilisateur, le procédé comprenant en outre la détermination, par le processeur, d'une ou de plusieurs secondes questions de suivi à présenter au contact, sur la base au moins du point d'intérêt commun.

8. Procédé selon l'une quelconque des revendications 1 à 7, comprenant en outre la communication, par le processeur, du profil d'utilisateur de l'utilisateur au point d'intérêt.

9. Procédé selon la revendication 8, comprenant en outre la réception au niveau du processeur (202), d'une ou de plusieurs réponses à la communication du profil d'utilisateur, en provenance du point d'intérêt.

10. Procédé selon l'une quelconque des revendications 1 à 9, dans lequel les informations de navigation comprennent au moins l'une d'une date actuelle et d'une heure actuelle, un ou plusieurs itinéraires d'un emplacement actuel de l'utilisateur à une destination demandée, des conditions d'itinéraire actuelles pour les un ou plusieurs itinéraires.

11. Procédé selon la revendication 10, dans lequel les conditions d'itinéraire comprennent une ou plusieurs conditions de circulation.

12. Procédé selon l'une quelconque des revendications 1 à 11, dans lequel le profil d'utilisateur comprend au moins l'une d'informations de planification d'utilisateur et d'informations de liste de tâches à effectuer par l'utilisateur.

13. Système, comprenant :
une interface (220) configurée pour recevoir des informations de navigation et un profil d'utilisateur associé à un utilisateur ; et
un processeur (202), couplé de manière communicative à l'interface, configuré pour :
déterminer des premières questions de suivi à présenter à l'utilisateur, sur la base au moins des informations de navigation et du profil d'utilisateur, les premières questions de suivi comprenant une ou plusieurs questions initiales et une ou plusieurs questions supplémentaires qui dépendent des une ou plusieurs questions initiales et étant générées dynamiquement par l'interrogation du profil d'utilisateur de l'utilisateur et la comparaison du profil d'utilisateur avec au moins les informations de navigation,
communiquer, par le processeur (202) et par l'intermédiaire de l'interface (220), les premières questions de suivi à l'utilisateur ;
recevoir, au niveau du processeur (202) et par l'intermédiaire de l'interface (220), une ou plusieurs réponses d'utilisateur aux premières questions de suivi ; et
déterminer, par le processeur (202), un point d'intérêt sur la base au moins des une ou plusieurs réponses d'utilisateur aux premières questions de suivi.

14. Système selon la revendication 13, dans lequel le processeur est en outre configuré pour :
déterminer plusieurs points d'intérêt sur la base au moins des une ou plusieurs réponses de l'utilisateur aux une ou plusieurs questions de suivi.
